(19) Europäisches Patentamt / European Patent Office / Office européen des brevets

(11) **EP 3 108 455 B1**

(12) **EUROPEAN PATENT SPECIFICATION**

(45) Date of publication and mention
of the grant of the patent:
**20.12.2017 Bulletin 2017/51**

(21) Application number: **14708953.6**

(22) Date of filing: **18.02.2014**

(51) Int Cl.:
**G06T 19/00** (2011.01)      **G06K 9/46** (2006.01)
**G06T 7/00** (2017.01)      **G06T 11/60** (2006.01)

(86) International application number:
**PCT/IB2014/059078**

(87) International publication number:
**WO 2015/124962 (27.08.2015 Gazette 2015/34)**

(54) **TRANSPARENCY DETERMINATION FOR OVERLAYING IMAGES ON AN ELECTRONIC DISPLAY**

TRANSPARENZBESTIMMUNG ZUR ÜBERLAGERUNG VON BILDERN AUF EINER ELEKTRONISCHEN ANZEIGE

DÉTERMINATION DE TRANSPARENCE AFIN DE SUPERPOSER DES IMAGES SUR UN AFFICHAGE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2016 Bulletin 2016/52**

(73) Proprietor: **Sony Mobile Communications Inc.**
**Shinagawa-ku**
**Tokyo 140-0002 (JP)**

(72) Inventor: **RASMUSSON, Jim**
**235 41 Vellinge (SE)**

(74) Representative: **Banzer, Hans-Jörg**
**Kraus & Weisert**
**Patentanwälte PartGmbB**
**Thomas-Wimmer-Ring 15**
**80539 München (DE)**

(56) References cited:

- **DAVID VANONI ET AL: "ARtifact: Tablet-Based Augmented Reality for Interactive Analysis of Cultural Artifacts", MULTIMEDIA (ISM), 2012 IEEE INTERNATIONAL SYMPOSIUM ON, IEEE, 10 December 2012 (2012-12-10), pages 44-49, XP032323103, DOI: 10.1109/ISM.2012.17 ISBN: 978-1-4673-4370-1**
- **Doug Peterson: "What was there? | doug --- off the record", , 25 October 2011 (2011-10-25), pages 1-4, XP055112842, Retrieved from the Internet: URL:https://dougpete.wordpress.com/2011/10/25/what-was-there/ [retrieved on 2014-04-08]**
- **Sgrieve: "Setting Transparency Based on Pixel Values in Matplotlib", , 18 June 2013 (2013-06-18), pages 1-4, XP055112846, Retrieved from the Internet: URL:http://stackoverflow.com/questions/17170229/setting-transparency-based-on-pixel-values-in-matplotlib [retrieved on 2014-04-08]**
- **Eugene Khvedchenya: "A battle of three descriptors: SURF, FREAK and BRISK - Computer Vision TalksComputer Vision Talks", , 18 August 2012 (2012-08-18), pages 1-7, XP055112848, Retrieved from the Internet: URL:http://computer-vision-talks.com/articles/2012-08-18-a-battle-of-three-descriptors-surf-freak-and-brisk/ [retrieved on 2014-04-08]**

Description

TECHNICAL FIELD

The present disclosure relates to overlaying images, and more particularly relates to determining a transparency value to use when overlaying an overlaid image on top of a base image.

BACKGROUND

Augmented reality (AR) refers to supplementing a live view of a real-world environment with computer-generated sensory input such as sound, video, graphics, or Global Positioning System (GPS) data. AR applications are becoming more and more popular. Some AR applications display a base image (e.g., from a live camera feed of a smartphone) and overlay the base image with an overlaid image to provide additional information for a user. One such application is the "Street Museum" smartphone application which permits smartphone users in London to point their smartphone camera in the direction of a given part of London, view a camera feed from their camera on a display of their smartphone, and to overlay historic pictures of London on the camera feed images.

A similar feature is provided by some non-augmented reality applications that do not provide a live view. For example, the website "What Was There" (www.whatwasthere.com) permits users to upload a historic photo, and to view the photo overlaid on top of recent picture of the same geographic area from GOOGLE "street view." These applications use a default transparency value for overlaid images which does not take into account the content of the overlaid images and the base images.

SUMMARY

According to one aspect of the present disclosure, a computer-implemented method of overlaying two images on an electronic display is disclosed. An overlay area between a base image and an overlaid image is determined. A number of feature points in the overlay area of the base image is determined, and a number of feature points in the overlay area of the overlaid image is also determined. A comparison is performed of the number of feature points in the overlay area of each of the base image and the overlaid image. A transparency value is determined for the overlaid image based on the comparison. The base image and overlaid image are displayed on an electronic display, such that the overlaid image is overlaid on the base image, with a transparency of the overlaid image being based on the determined transparency value.

According to another aspect of the present disclosure, a computing device operative to overlay two images on an electronic display is disclosed. The computing device includes an electronic display and one or more processing circuits. The one or more processing circuits are configured to determine an overlay area between a base image and an overlaid image, determine a number of feature points in the overlay area of the base image, and determine a number of feature points in the overlay area of the overlaid image. The one or more processing circuits are configured to compare the number of feature points in the overlay area of each of the base image and the overlaid image, and to determine a transparency value for the overlaid image based on the comparison. The base image and overlaid image are displayed on the electronic display, such that the overlaid image is overlaid on the base image, with a transparency of the overlaid image being based on the determined transparency value.

Some example algorithms that may be used to determine a number of feature points include a Scale-Invariant Feature Transform (SIFT) algorithm, a Speeded Up Robust Features (SURF) algorithm, a Fast Retina Keypoint (FREAK) algorithm, and a Binary Robust Invariant Scalable Keypoints (BRISK) algorithm.

In one or more embodiments, the transparency value is based on a ratio of the number of feature points in the overlay area of the base image to the number of feature points in the overlay area in the overlaid image. The transparency value approaches a maximum permitted transparency as the ratio increases, and approaches a minimum permitted transparency as the ratio decreases.

In one or more embodiments, the base image is obtained from a live camera feed, and the overlaid image comprises an augmented reality image to be overlaid on the base image.

Of course, the present disclosure is not limited to the above features and advantages. Indeed, those skilled in the art will recognize additional features and advantages upon reading the following detailed description, and upon viewing the accompanying drawings.

BRIEF DESCRIPTION OF THE DRAWINGS

Fig.1 illustrates an example mobile computing device that includes an electronic display.

Fig. 2 illustrates an example base image.

Fig. 3 illustrates an example overlaid image.

Fig. 4 illustrates an example method of overlaying two images on an electronic display.

Fig. 5 illustrates a number of feature points identified in the image of Fig. 2.

Fig. 6 illustrates a number of feature points identified in the image of Fig. 3.

Fig. 7 illustrates the overlaid image of Fig. 3 overlaid on the base image of Fig. 2.

Fig. 8 illustrates another overlaying of the images of Figs. 2-3.

Fig. 9 illustrates an example computing device configured to overlay two images on an electronic display.

## DETAILED DESCRIPTION

The present disclosure describes a method and apparatus for determining a transparency value to use when overlaying an overlaid image on top of a base image (e.g., in an augmented reality application). The transparency value is determined based on a quantity of feature points in the base image and a quantity of feature points in the overlaid image. The quantity of feature points in each image can be calculated using known algorithms, such as the Scale-Invariant Feature Transform (SIFT) algorithm, the Speeded Up Robust Features (SURF) algorithm, the Fast Retina Keypoint (FREAK) algorithm, and/or the Binary Robust Invariant Scalable Keypoints (BRISK) algorithm, for example.

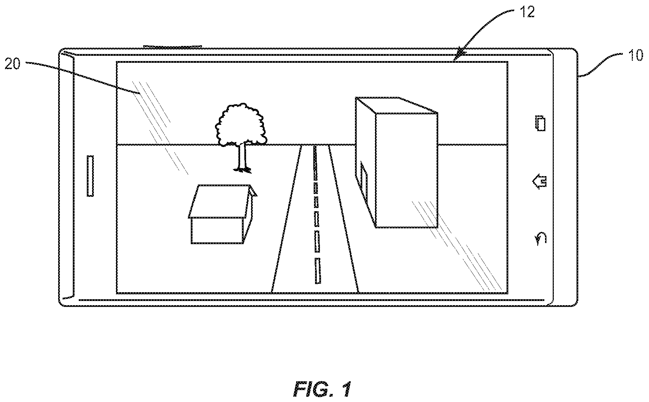

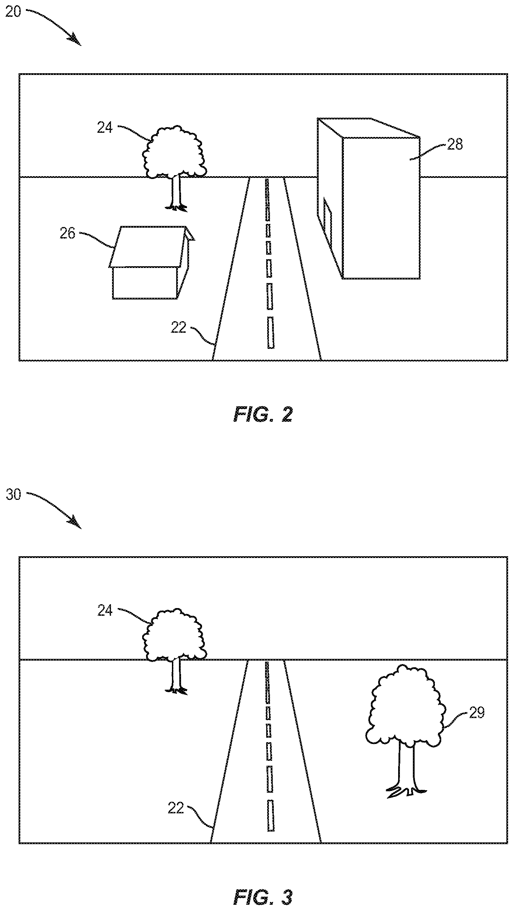

Referring now to Fig. 1, a mobile computing device 10 is shown which includes an electronic display 12 upon which an image 20 is shown. In one example, the displayed image 20 is from a camera embedded into the computing device 10 (e.g., a photograph or an image from a live camera feed). Fig. 2 shows the image 20 of Fig. 1. As shown in Fig. 2, the main compositional elements of the image are a road 22, a tree 24, and two buildings 26, 28. For the discussion below assume that the image 20 is a "base image" upon which an overlaid image is to be superimposed.

Fig. 3 illustrates another example image 30 of the same scene that is shown in the first image 20, but which shows different compositional elements. The main compositional elements in the image 30 are the road 22, the tree 24, and another tree 30. Neither building 26, 28 is shown in the image 30. For the discussion below, assume that Fig. 3 was taken at a different period of time than the image 20 (e.g., months or years apart). Assume also that the image 30 of Fig. 3 will be used as an "overlaid image" to be overlaid on top of the image 20 (e.g., in an augmented reality application).

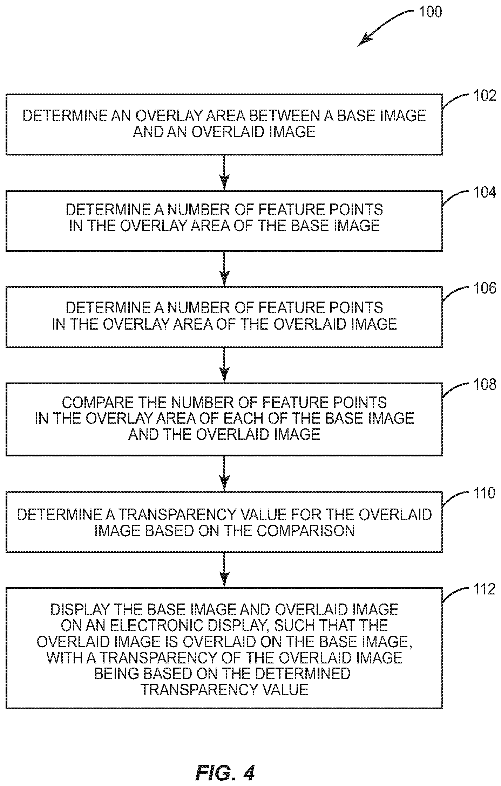

With this in mind, Fig. 4 illustrates an example computer-implemented method 100 of overlaying two images on an electronic display (e.g., display 12 of mobile computing device 10). An overlay area is determined between a base image 20 and an overlaid image 30 (block 102). In one example, both the base image 20 and overlaid image 30 are the same size, and are taken from the same vantage point, so the overlay area can be the entire area of each image 20, 30. In other embodiments, block 102 involves alignment of the images 20, 30, and/or resizing one of the images 20, 30 so that the images are properly sized with respect to one another. In such embodiments, the overlay area may be smaller than one or both of the images 20, 30.

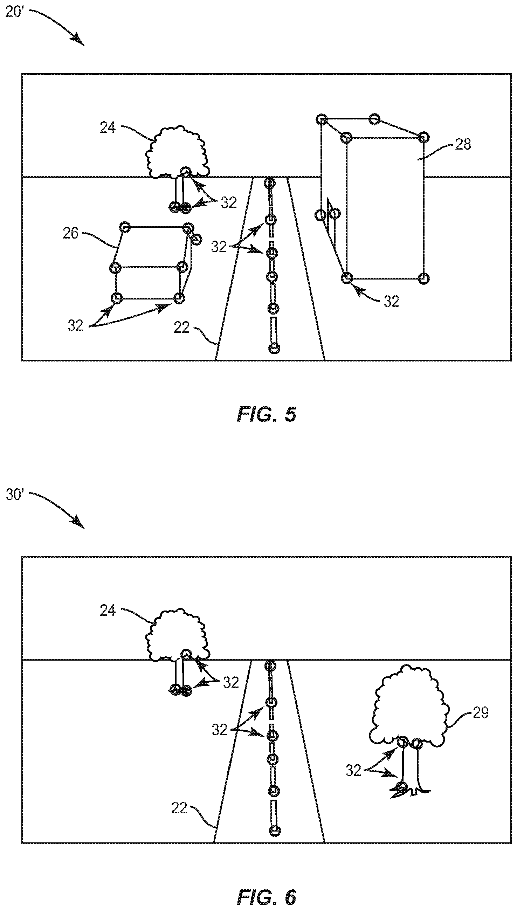

A number of feature points in the overlay area of the base image 20 is determined (block 104), and a number of feature points in the overlay area of the overlaid image 30 is also determined (block 106). Fig. 5 illustrates a number of feature points identified in the image 20 of Fig. 2 according to one example. In Fig. 5, the image 20 and its feature points 32 are shown as image 20'. Similarly, Fig. 6 illustrates a number of feature points 32 identified in the image 30 of Fig. 3 according to one example (shown as 30'). In each of Figs. 5-6, a circle indicates an identified feature point 32.

In the examples of Figs. 5-6, the base image 20 is identified as having 24 feature points, and the overlaid image 30 is identified as having 12 feature points. The number of feature points in the base and overlaid images may be determined using a variety of algorithms that are well known to those of ordinary skill in the art, such as the Scale-Invariant Feature Transform (SIFT) algorithm, the Speeded Up Robust Features (SURF) algorithm, the Fast Retina Keypoint (FREAK) algorithm, or the Binary Robust Invariant Scalable Keypoints (BRISK) algorithm. Of course these are only examples, and it is understood that other algorithms could be used. Because use of such algorithms to identify feature points is well known by those of ordinary skill in the art, implementation of these algorithms will not be described in detail herein.

Referring again to Fig. 4, the number of feature points in the overlay area of each of the base image 20 and the overlaid image 30 are compared (block 108). In the example above, this would include comparing the 24 feature points of the base image 20 to the 12 feature points of the overlaid image 30. A transparency value for the overlaid image 30 is determined based on the comparison (block 110). The base image 20 and overlaid image 30 are then displayed on an electronic display (bock 112), such that the overlaid image 30 is overlaid on the base image 20, with a transparency of the overlaid image 30 being based on the determined transparency value.

In one example, the transparency value for the overlaid image is determined according to equation (1) below:

$$Transparency\_OI = \min\left(max\left(\frac{100*FP\_BI}{FP\_BI+FP\_OI}, 20\right), 80\right) \qquad \text{equation (1)}$$

In this equation, "Transparency_OI" refers to a transparency of the overlaid image, "FP_BI" refers to a quantity of feature points in the overlay area of the base image 20, and "FP_OI" refers to a quantity of feature points in the overlay area of the overlaid image 30. Equation (1) assumes that 20% is a minimum permissible transparency value (which emphasizes the overlaid image 30), and assume that 80% is a maximum permissible transparency value (which emphasizes the base image 20). Thus, in this equation the transparency values are clamped at 20% and 80%.

According to equation (1), the transparency value approaches a maximum permitted transparency (80%) as a ratio of the number of feature points in the overlay area of the base image 20 to the number of feature points in the overlay area in the overlaid image 30 increases. Also, the transparency value approaches a minimum permitted transparency (20%) as the ratio of the number of feature points in the overlay area of the base image 20 to the number of feature points in the overlay area of the overlaid image 30 decreases.

Assume that 100% would provide complete transparency (i.e., the overlaid image 30 would not be visible at all), and that 0% transparency would make the overlay area of the base image 20 not visible at all (i.e., the overlaid image 30 would simply replace the overlay area of the base image 20 when overlaid). Based on this assumption, using equation (1) to determine the transparency value (block 110) comprises determining a transparency value within a range of permissible transparency values (e.g., a range of 20% - 80%), each of which provides for partial, but not complete, transparency of the overlaid image.

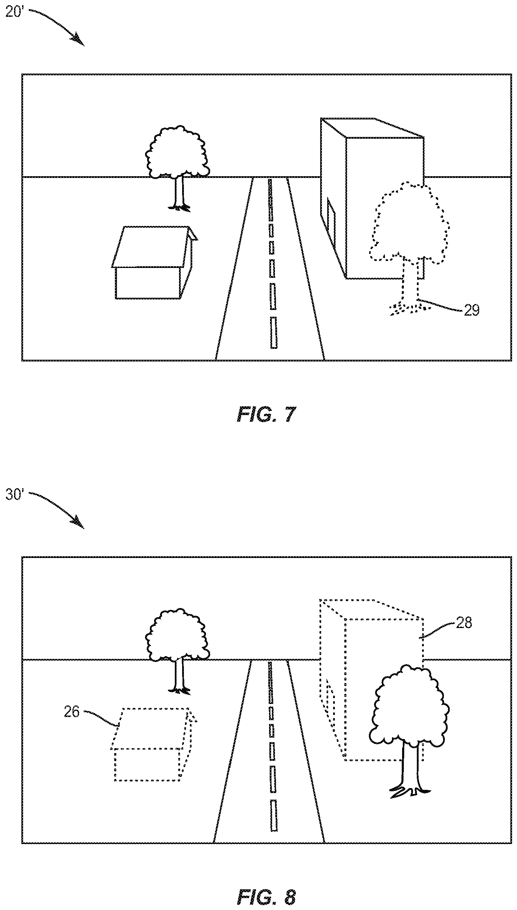

Using the input values described above, where FP_BI = 24 and FP_OI = 12, equation (1) yields a transparency value of 67% for the overlaid image 30. This assumes that standard rounding is used (e.g., .5 rounds up and less than .5 rounds down). Thus, because base image 20 has more feature points than the overlaid image 30, the overlaying would emphasize the base image 20. An example overlaying according to the determined transparency value of 67 is shown in Fig. 7, where tree 30 (which is only included in the overlaid image 30) is displayed based on a transparency value of 67%.

An example equation used to determine a transparency value of the base image 20 is shown in equation (2) below:

$$Transparency\_BI = 1 - Transparency\_OI \qquad \text{equation (2)}$$

In equation (2), "Transparency_BI" refers to a transparency of the base image. This indicates the net effect of overlaying the overlaid image 30 using the transparency value of "Transparency_OI."

As another example, assume that the image 30 was instead used as a base image, and that the image 20 was instead used as an overlaid image. In this example, FP_BI = 12 and FP_OI = 24, which would yield a transparency value of 33% for the overlaid image and a corresponding transparency value of 67% for the base image. In this alternate example, because the overlaid image has more feature points than the base image, the overlaying would emphasize the overlaid image. Fig. 8 illustrates an example of such an overlaying, in which buildings 26, 28 (which in this case would only be present in the base image) are shown based on a transparency value of 33%.

The identified feature points are considered to be the most interesting and salient features of a given image. Thus, the image that has the most features gets more visibility in a proportional fashion using equation (1). The basic logic behind this is that a user would wish to have greater emphasis placed on the image which has a higher feature point count, and therefore presumably more interesting details.

In one or more embodiments, the determined transparency value serves as a default transparency, such that after the images 20, 30 are displayed (block 112), a viewing user can manually adjust the default transparency to something they may find more desirable. In such embodiments, users can override the default transparency to select whichever transparency they find most desirable.

If the base image 20 is from a live camera feed, it is possible that images may be recorded and displayed at a rapid rate (e.g., 30 frames per second "FPS"). If this is the case, some processing time may be needed before a transparency value can be determined for a frame (e.g., perhaps a 1 frame delay is needed). In such examples, the determining of an overlay area between the base image 20 and the overlaid image 30 (block 102) could be performed based on a previous version of the base image 20 (e.g., use feature points in frame 1 for displaying a frame 3 image). This assumes that a user would hold the camera of their computing device relatively still. Updated transparency values could then be recalculated (e.g., periodically at a predetermined time period).

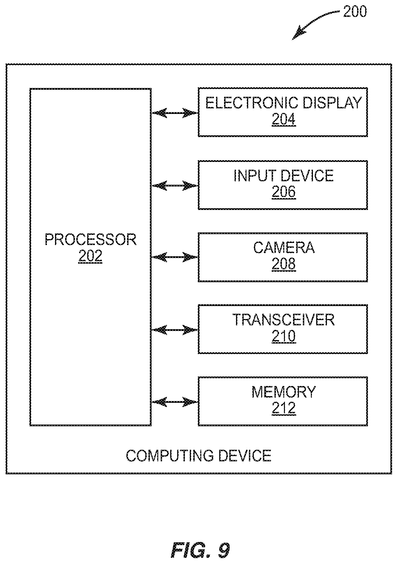

Fig. 9 illustrates an example computing device 200 that may be used as the computing mobile computing device 10 of Fig. 1. The computing device 200 is configured to overlay two images on an electronic display 204. The computing device 200 includes one or more processing circuits (shown as processor 202), including, for example, one or more microprocessors, microcontrollers, Application Specific Integrated Circuits (ASICs), or the like configured with appropriate software and/or firmware to carry out one or more of the techniques discussed above. In particular, the processor 202 is configured to determine an overlay area between a base image 20 and an overlaid image 30, determine a number of feature points in the overlay area of the base image 20, and determine a number of feature points in the overlay area of the overlaid image 30. The processor 202 is configured to compare the number of feature points in the overlay area of each of the base image 20 and the overlaid image 30, and determine a transparency value for the overlaid image 30 based on the comparison. The processor 202 is further configured to display the base image 20 and overlaid image 30 on the electronic display 204, such that the overlaid image 30 is overlaid on the base image 20, with a transparency of the overlaid image 30 being based on the determined transparency value.

In the example of Fig. 9, the computing device 200 also includes an input device 206 for initiating the overlaying of the images 20, 30 (e.g., one or more buttons). The computing device 200 also includes a camera 208 for recording images (e.g., as background images), and includes a transceiver for receiving overlaid images (e.g., receiving augmented reality images via a packet data network, such as the Internet). The computing device 200 also includes a non-transitory computer-readable storage medium (shown as memory 212) for storing the images 20, 30, and for storing instructions that configure the processor 202 as discussed above (e.g., a computer program product that configures the processor 202 to implement one or more of the techniques described above).

Although the computing device shown in Fig. 1 is a mobile computing device 10 (e.g., a smartphone or tablet computer), it is understood that these are non-limiting examples, and that the computing device 200 could instead be a desktop or laptop computer, for example. In such embodiments, the electronic display 204 may be external to the computing device 200 and not included in the computing device 200 as shown in Fig. 9.

In one or more embodiments, the base image 20 is obtained from a live camera feed, and the overlaid image 30 comprises an augmented reality image to be overlaid on the base image 20. This could be useful in augmented reality applications, such as the "Street Museum" smartphone application described above. However, the techniques discussed herein are not limited to use in augmented reality, and could be used for non-augmented reality applications (e.g., the website "What Was There" discussed above).

Also, it is understood that equations (1) and (2) and the permissible range of transparency values of 20% - 80) are only non-limiting examples, and it is understood that other equations and other maximum and minimum permitted transparency values could be used. It is also understood that the base image 20 and overlaid image 30 discussed above are also non-limiting examples.

Thus, the present disclosure may, of course, be carried out in other ways than those specifically set forth herein without departing from essential characteristics of the present disclosure. The present embodiments are to be considered in all respects as illustrative and not restrictive, and all changes coming within the meaning and equivalency range of the appended claims are intended to be embraced therein.

## Claims

1. A computer-implemented method (100) of overlaying two images on an electronic display (12, 204), determining an overlay area between a base image (20) and an overlaid image (30);
determining a number of feature points (32) in the overlay area of the base image (20); determining a number of feature points (32) in the overlay area of the overlaid image (30);
**characterized by**:

   comparing the number of feature points (32) in the overlay area of each of the base image (20) and the overlaid image (30);

   determining a transparency value for the overlaid image (30) based on the comparison; and
displaying the base image (20) and overlaid image (30) on an electronic display (12, 204), such that the overlaid image (30) is overlaid on the base image (20), with a transparency of the overlaid image (30) being based on the determined transparency value.

2. The computer-implemented method (100) of claim 1, wherein determining the transparency value comprises determining a transparency value within a range of permissible transparency values, each of which provides for partial, but not complete, transparency of the overlaid image (30).

3. The computer-implemented method (100) of claim 1 or claim 2, wherein determining the number of feature points (32) in the overlay area of the base image (20) and determining the number of feature points (32) in the overlay area of the overlaid image (30) are performed using a Scale-Invariant Feature Transform (SIFT) algorithm.

4. The computer-implemented method (100) of claim 1 or claim 2, wherein determining the number of feature points (32) in the overlay area of the base image (20) and determining the number of feature points (32) in the overlay area of the overlaid image (30) are performed using a Speeded Up Robust Features (SURF) algorithm.

5. The computer-implemented method (100) of claim 1 or claim 2, wherein determining the number of feature points (32) in the overlay area of the base image (20) and determining the number of feature points (32) in the overlay area of the overlaid image (30) are performed using a Fast Retina Keypoint (FREAK) algorithm.

6. The computer-implemented method (100) of claim 1 or claim 2, wherein determining the number of feature points (32) in the overlay area of the base image (20) and determining the number of feature points (32) in the overlay area of the overlaid image (30) are performed using a Binary Robust Invariant Scalable Keypoints (BRISK) algorithm.

7. The computer-implemented method (100) of any one of claims 1-6,
wherein the base image (20) is obtained from a live camera feed; and
wherein the overlaid image (30) comprises an augmented reality image to be overlaid on the base image (20).

8. The computer-implemented method (100) of any one of claims 1-7,
wherein the transparency value approaches a maximum permitted transparency as a ratio of the number of feature points (32) in the overlay area of the base image (20) to the number of feature points (32) in the overlay area in the overlaid image (30) increases; and
wherein the transparency value approaches a minimum permitted transparency as the ratio of the number of feature points (32) in the overlay area of the base image (20) to the number of feature points (32) in the overlay area of the overlaid image (30) decreases.

9. A computing device (200) operative to overlay two images on an electronic display (12, 204), an electronic display (12, 204); and
one or more processing circuits (202) configured to:

   determine an overlay area between a base image (20) and an overlaid image (30);
   determine a number of feature points (32) in the overlay area of the base image (20);
   determine a number of feature points (32) in the overlay area of the overlaid image (30); **characterized by**:

      compare the number of feature points (32) in the overlay area of each of the base image (20) and the overlaid image (30);

   determine a transparency value for the overlaid image (30) based on the comparison; and
   display the base image (20) and overlaid image (30) on the electronic display (12, 204), such that the overlaid image (30) is overlaid on the base image (20), with a transparency of the overlaid image (30) being based on the determined transparency value.

10. The computing device (200) of claim 9, wherein to determine the transparency value, the one or more processing circuits (202) are configured to determine a transparency value within a range of permissible transparency values, each of which provides for partial, but not complete, transparency of the overlaid image (30).

11. The computing device (200) of claim 9 or claim 10, wherein to determine the number of feature points (32) in the overlay area of the base image (20) and to determine the number of feature points (32) in the overlay area of the overlaid image (30), the one or more processing circuits (202) are configured to use a Scale-Invariant Feature Transform (SIFT) algorithm.

12. The computing device (200) of claim 9 or claim 10, wherein to determine the number of feature points (32) in the overlay area of the base image (20) and to determine the number of feature points (32) in the overlay area of the overlaid image (30), the one or more processing circuits (202) are configured to use a Speeded Up Robust Features (SURF) algorithm.

13. The computing device (200) of claim 9 or claim 10, wherein to determine the number of feature points (32) in the overlay area of the base image (20) and to determine the number of feature points (32) in the overlay area of the overlaid image, the one or more processing circuits (202) are configured to use a Fast Retina Keypoint (FREAK) algorithm.

**14.** The computing device (200) of claim 9 or claim 10, wherein to determine the number of feature points (32) in the overlay area of the base image (20) and to determine the number of feature points (32) in the overlay area of the overlaid image (30), the one or more processing circuits (202) are configured to use a Binary Robust Invariant Scalable Keypoints (BRISK) algorithm.

**15.** The computing device (200) of any one of claims 9-14,
wherein the transparency value approaches a maximum permitted transparency as a ratio of the number of feature points (32) in the overlay area of the base image (20) to the number of feature points (32) in the overlay area in the overlaid image (30) increases; and
wherein the transparency value approaches a minimum permitted transparency as the ratio of the number of feature points (32) in the overlay area of the base image (20) to the number of feature points (32) in the overlay area of the overlaid image (30) decreases.

**Patentansprüche**

**1.** Computerimplementiertes Verfahren (100) eines Überlagerns von zwei Bildern auf einer elektronischen Anzeige (12, 204),
Bestimmen eines Überlagerungsbereichs zwischen einem Basisbild (20) und einem überlagerten Bild (30);
Bestimmen einer Anzahl von Merkmalspunkten (32) in dem Überlagerungsbereich des Basisbildes (20);
Bestimmen einer Anzahl von Merkmalspunkten (32) in dem Überlagerungsbereich des überlagerten Bildes (30);
**gekennzeichnet durch**:
Vergleichen der Anzahl von Merkmalspunkten (32) in dem Überlagerungsbereich von jedem von dem Basisbild (20) und dem überlagerten Bild (30);
Bestimmen eines Transparenzwertes für das überlagerte Bild (30) basierend auf dem Vergleich; und
Anzeigen des Basisbildes (20) und überlagerten Bildes (30) auf einer elektronischen Anzeige (12, 204),
derart, dass das überlagerte Bild (30) dem Basisbild (20) überlagert ist, wobei eine Transparenz des überlagerten Bildes (30) auf dem bestimmten Transparenzwert basiert.

**2.** Computerimplementiertes Verfahren (100) nach Anspruch 1, wobei das Bestimmen des Transparenzwertes ein Bestimmen eines Transparenzwertes innerhalb eines Bereiches von möglichen Transparenzwerten umfasst, wobei jeder davon eine partielle, aber nicht vollständige, Transparenz des überlagerten Bildes (30) bereitstellt.

**3.** Computerimplementiertes Verfahren (100) nach Anspruch 1 oder Anspruch 2, wobei das Bestimmen der Anzahl der Merkmalspunkte (32) in dem Überlagerungsbereich des Basisbildes (20) und das Bestimmen der Anzahl von Merkmalspunkten (32) in dem Überlagerungsbereich des überlagerten Bildes (30) unter Verwendung eines Algorithmus mit skalierungsinvarianter Merkmalstransformation (Scale-Invariant Feature Transform, SIFT) ausgeführt werden.

**4.** Computerimplementiertes Verfahren (100) nach Anspruch 1 oder Anspruch 2, wobei das Bestimmen der Anzahl von Merkmalspunkten (32) in dem Überlagerungsbereich des Basisbildes (20) und das Bestimmen der Anzahl von Merkmalspunkten (32) in dem Überlagerungsbereich des überlagerten Bildes (30) unter Verwendung eines Algorithmus mit beschleunigten robusten Merkmalen (Speeded Up Robust Features, SURF) ausgeführt werden.

**5.** Computerimplementiertes Verfahren (100) nach Anspruch 1 oder Anspruch 2, wobei das Bestimmen der Anzahl von Merkmalspunkten (32) in dem Überlagerungsbereich des Basisbildes (20) und das Bestimmen der Anzahl von Merkmalspunkten (32) in dem Überlagerungsbereich des überlagerten Bildes (30) unter Verwendung eines Algorithmus mit schnellem Retina Schlüsselpunkt (Fast Retina Keypoint, FREAK) ausgeführt werden.

**6.** Computerimplementiertes Verfahren (100) nach Anspruch 1 oder Anspruch 2, wobei das Bestimmen der Anzahl von Merkmalspunkten (32) in dem Überlagerungsbereich des Basisbildes (20) und das Bestimmen der Anzahl von Merkmalspunkten (32) in dem Überlagerungsbereich des überlagerten Bildes (30) unter Verwendung eines Algorithmus mit binären robusten invarianten skalierbaren Schlüsselpunkten (Binary Robust Invariant Scaleable Keypoints, BRISK) ausgeführt werden.

**7.** Computerimplementiertes Verfahren (100) nach einem der Ansprüche 1-6,
wobei das Basisbild (20) von einer Live-Kamerazuführung erhalten wird; und
wobei das überlagerte Bild (30) ein Bild einer erweiterten Realität umfasst, welches auf das Basisbild (20) zu überlagern ist.

8. Computerimplementiertes Verfahren (100) nach einem der Ansprüche 1-7,
wobei sich der Transparenzwert einer maximal erlaubten Transparenz annähert, während sich ein Verhältnis von der Anzahl von Merkmalspunkten (32) in dem Überlagerungsbereich des Basisbildes (20) zu der Anzahl von Merkmalspunkten (32) in dem Überlagerungsbereich des überlagerten Bildes (30) erhöht; und
wobei sich der Transparenzwert einer minimalen erlaubten Transparenz annähert, während sich ein Verhältnis der Anzahl von Merkmalspunkten (32) in dem Überlagerungsbereich des Basisbildes (20) zu der Anzahl von Merkmalspunkten (32) in dem Überlagerungsbereich des überlagerten Bildes (30) verringert.

9. Rechenvorrichtung (200), welche ausgestaltet ist, zwei Bilder auf einer elektronischen Anzeige (12, 204) zu überlagern,
eine elektronische Anzeige (12, 204); und
einen oder mehrere Verarbeitungsschaltkreise (202), welche ausgestaltet sind:

einen Überlagerungsbereich zwischen einem Basisbild (20) und einem überlagerten Bild (30) zu bestimmen;
eine Anzahl von Merkmalspunkten (32) in dem Überlagerungsbereich des Basisbildes (20) zu bestimmen;
eine Anzahl von Merkmalspunkten (32) in dem Überlagerungsbereich des überlagerten Bildes (30) zu bestimmen;
**gekennzeichnet durch**:

die Anzahl von Merkmalspunkten (32) in dem Überlagerungsbereich von jedem von dem Basisbild (20) und dem überlagerten Bild (30) zu vergleichen;
einen Transparenzwert für das überlagerte Bild (30) basierend auf dem Vergleich zu bestimmen; und
das Basisbild (20) und überlagerte Bild (30) auf der elektronischen Anzeige (12, 204) anzuzeigen, sodass das überlagerte Bild (30) dem Basisbild (20) überlagert ist, wobei eine Transparenz des überlagerten Bildes (30) auf dem bestimmten Transparenzwert basiert.

10. Rechenvorrichtung (200) nach Anspruch 9, wobei, um den Transparenzwert zu bestimmen, der eine oder die mehreren Verarbeitungsschaltkreise (202) ausgestaltet sind, einen Transparenzwert innerhalb eines Bereichs von erlaubten Transparenzwerten zu bestimmen, wobei jeder davon eine partielle, aber nicht vollständige, Transparenz des überlagerten Bildes (30) bereitstellt.

11. Rechenvorrichtung (200) nach Anspruch 9 oder Anspruch 10, wobei, um die Anzahl von Merkmalspunkten (32) in dem Überlagerungsbereich des Basisbildes (20) zu bestimmen und um die Anzahl von Merkmalspunkten (32) in dem Überlagerungsbereich des überlagerten Bildes (30) zu bestimmen, der eine oder die mehreren Verarbeitungsschaltkreise (202) ausgestaltet sind, einen Algorithmus mit skalierungsinvarianter Merkmalstransformationn (Scale-Invariant Feature Transform, SIFT) zu verwenden.

12. Rechenvorrichtung (200) nach Anspruch 9 oder Anspruch 10, wobei, um die Anzahl von Merkmalspunkten (32) in dem Überlagerungsbereich des Basisbildes (20) zu bestimmen und um die Anzahl von Merkmalspunkten (32) in dem Überlagerungsbereich des überlagerten Bildes (30) zu bestimmen, der eine oder die mehreren Verarbeitungsschaltkreise (202) ausgestaltet sind, einen Algorithmus mit beschleunigten robusten Merkmalen (Speeded up Robust Features, SURF) zu verwenden.

13. Rechenvorrichtung (200) nach Anspruch 9 oder Anspruch 10, wobei, um die Anzahl von Merkmalspunkten (32) in dem Überlagerungsbereich des Basisbildes (20) zu bestimmen und um die Anzahl von Merkmalspunkten (32) in dem Überlagerungsbereich des überlagerten Bildes zu bestimmen, der eine oder die mehreren Schaltkreise (202) ausgestaltet sind, einen Algorithmus mit schnellem Retina Schlüsselpunkt (Fast Retina Keypoint, FREAK) zu verwenden.

14. Rechenvorrichtung (200) nach Anspruch 9 oder Anspruch 10, wobei, um die Anzahl von Merkmalspunkten (32) in dem Überlagerungsbereich des Basisbildes (20) zu bestimmen und um die Anzahl von Merkmalspunkten (32) in dem Überlagerungsbereich des überlagerten Bildes (30) zu bestimmen, der eine oder die mehreren Schaltkreise (202) ausgestaltet sind, einen Algorithmus mit binären robusten invarianten skalierbaren Schlüsselpunkten (Binary Robust Invariant Scaleable Keypoints, BRISK) zu verwenden.

15. Rechenvorrichtung (200) nach einem der Ansprüche 9-14, wobei sich der Transparenzwert einer maximal erlaubten Transparenz annähert, während sich ein Verhältnis von der Anzahl von Merkmalspunkten (32) in dem Überlagerungsbereich des Basisbildes (20) zu der Anzahl von Merkmalspunkten (32) in dem Überlagerungsbereich des überlagerten Bildes (30) erhöht; und

wobei sich der Transparenzwert einer minimalen erlaubten Transparenz annähert, während sich das Verhältnis der Anzahl von Merkmalspunkten (32) in dem Überlagerungsbereich des Basisbildes (20) zu der Anzahl von Merkmalspunkten (32) in dem Überlagerungsbereich des überlagerten Bildes (30) verringert.

**Revendications**

1. Procédé mis en oeuvre par ordinateur (100) permettant de superposer deux images sur un dispositif d'affichage électronique (12, 204),
   déterminant une zone de superposition entre une image de base (20) et une image superposée (30) ;
   déterminant un nombre de points caractéristiques (32) sur la zone de superposition de l'image de base (20) ;
   déterminant un nombre de points caractéristiques (32) sur la zone de superposition de l'image superposée (30) ;
   **caractérisé par** :

   la comparaison du nombre de points caractéristiques (32) sur la zone de superposition de chacune des images de base (20) et superposée (30) ;
   la détermination d'une valeur de transparence de l'image superposée (30) sur la base de la comparaison ; et
   l'affichage de l'image de base (20) et de l'image superposée (30) sur un dispositif d'affichage électronique (12, 204), de manière que l'image superposée (30) se superpose à l'image de base (20), la transparence de l'image superposée (30) étant fonction de la valeur de transparence déterminée.

2. Procédé mis en oeuvre par ordinateur (100) selon la revendication 1, dans lequel la détermination de la valeur de transparence comprend la détermination d'une valeur de transparence à l'intérieur d'une plage de valeurs admissibles de transparence dont chacune permet une transparence partielle, mais non complète, de l'image superposée (30).

3. Procédé mis en oeuvre par ordinateur (100) selon la revendication 1 ou la revendication 2, dans lequel la détermination du nombre de points caractéristiques (32) sur la zone de superposition de l'image de base (20) et la détermination du nombre de points caractéristiques (32) sur la zone de superposition de l'image superposée (30) sont effectuées à l'aide d'un algorithme *Scale-Invariant Feature Transform* (SIFT, transformation de caractéristiques visuelles invariante à l'échelle).

4. Procédé mis en oeuvre par ordinateur (100) selon la revendication 1 ou la revendication 2, dans lequel la détermination du nombre de points caractéristiques (32) sur la zone de superposition de l'image de base (20) et la détermination du nombre de points caractéristiques (32) sur la zone de superposition de l'image superposée (30) sont effectuées à l'aide d'un algorithme *Speeded Up Robust Features* (SURF, caractéristiques robustes accélérées).

5. Procédé mis en oeuvre sur ordinateur (100) selon la revendication 1 ou la revendication 2, dans lequel la détermination du nombre de points caractéristiques (32) sur la zone de superposition de l'image de base (20) et la détermination du nombre de points caractéristiques (32) sur la zone de superposition de l'image superposée (30) sont effectuées à l'aide d'un algorithme *Fast Retina Keypoint* (FREAK, point clé rapide de la rétine).

6. Procédé mis en oeuvre par ordinateur (100), selon la revendication 1 ou la revendication 2, dans lequel la détermination du nombre de points caractéristiques (32) sur la zone de superposition de l'image de base (20) et la détermination du nombre de points caractéristiques (32) sur la zone de superposition de l'image superposée (30) sont effectuées à l'aide d'un algorithme *Binary Robust Invariant Scalable Keypoints* (BRISK, points clés binaires invariants robustes pouvant être mis à l'échelle).

7. Procédé mis en oeuvre sur ordinateur (100) selon l'une quelconque des revendications 1 à 6,
   dans lequel l'image de base (20) est obtenue par un flux de webcam ; et
   dans lequel l'image superposée (30) comprend une image de réalité augmentée à superposer à l'image de base (20).

8. Procédé mis en oeuvre sur ordinateur (100) selon l'une quelconque des revendications 1 à 7,
   dans lequel la valeur de transparence tend vers une transparence maximum admissible, à mesure qu'un rapport du nombre de points caractéristiques (32) sur la zone de superposition de l'image de base (20) au nombre de points caractéristiques (32) sur la zone de superposition de l'image superposée (30) augmente ; et

dans lequel la valeur de transparence tend vers une transparence minimum admissible, à mesure que le rapport du nombre de points caractéristiques (32) sur la zone de superposition de l'image de base (20) au nombre de points caractéristiques (32) sur la zone de superposition de l'image superposée (30) diminue.

9. Dispositif informatique (200) destiné à superposer deux images sur un dispositif d'affichage électronique (12, 204), un dispositif d'affichage électronique (12, 204) ; et

un ou plusieurs circuits de traitement (202) conçus pour :

déterminer une zone de superposition entre une image de base (20) et une image superposée (30) ;
déterminer un nombre de points caractéristiques (32) sur la zone de superposition de l'image de base (20) ;
déterminer un nombre de points caractéristiques (32) sur la zone de superposition de l'image superposée (30) ;
**caractérisé par** :

la comparaison du nombre de points caractéristiques (32) sur la zone de superposition de chacune des images de base (20) et superposée (30) ;
la détermination d'une valeur de transparence de l'image superposée (30) sur la base de la comparaison ; et
l'affichage de l'image de base (20) et de l'image superposée (30) sur le dispositif d'affichage électronique (12, 204), de manière que l'image superposée (30) se superpose à l'image de base (20), la transparence de l'image superposée (30) étant fonction de la valeur de transparence déterminée.

10. Dispositif informatique (200) selon la revendication 9, dans lequel pour déterminer la valeur de transparence, le ou les circuits de traitement (202) sont conçus pour déterminer une valeur de transparence à l'intérieur d'une plage de valeurs admissibles de transparence dont chacune permet une transparence partielle, mais non complète, de l'image superposée (30).

11. Dispositif informatique (200) selon la revendication 9 ou la revendication 10, dans lequel pour déterminer le nombre de points caractéristiques (32) sur la zone de superposition de l'image de base (20) et pour déterminer le nombre de points caractéristiques (32) sur la zone de superposition de l'image superposée (30), le ou les circuits de traitement (202) sont conçus pour utiliser un algorithme *Scale-Invariant Feature Transform* (SIFT).

12. Dispositif informatique (200) selon la revendication 9 ou la revendication 10, dans lequel pour déterminer le nombre de points caractéristiques (32) sur la zone de superposition de l'image de base (20) et pour déterminer le nombre de points caractéristiques (32) sur la zone de superposition de l'image superposée (30), le ou les circuits de traitement (202) sont conçus pour utiliser un algorithme *Speeded Up Robust Features* (SURF).

13. Dispositif informatique (200) selon la revendication 9 ou la revendication 10, dans lequel pour déterminer le nombre de points caractéristiques (32) sur la zone de superposition de l'image de base (20) et pour déterminer le nombre de points caractéristiques (32) sur la zone de superposition de l'image superposée, le ou les circuits de traitement (202) conçus pour utiliser un algorithme Fast *Retina Keypoint* (FREAK).

14. Dispositif informatique (200) selon la revendication 9 ou la revendication 10, dans lequel pour déterminer le nombre de points caractéristiques (32) sur la zone de superposition de l'image de base (20) et pour déterminer le nombre de points caractéristiques (32) sur la zone de superposition de l'image superposée (30), le ou les circuits de traitement (202) sont conçus pour utiliser un algorithme *Binary Robust Invariant Scalable Keypoints* (BRISK).

15. Dispositif informatique (200) selon l'une quelconque des revendications 9 à 14,
dans lequel la valeur de transparence tend vers une transparence maximum admissible, à mesure qu'un rapport du nombre de points caractéristiques (32) sur la zone de superposition de l'image de base (20) au nombre de points caractéristiques (32) sur la zone de superposition de l'image superposée (30) augmente ; et
dans lequel la valeur de transparence tend vers une transparence minimum admissible, à mesure que le rapport du nombre de points caractéristiques (32) sur la zone de superposition de l'image de base (20) au nombre de points caractéristiques (32) sur la zone de superposition de l'image superposée (30) diminue.

**FIG. 1**

**FIG. 2**

**FIG. 3**

100

102
DETERMINE AN OVERLAY AREA BETWEEN A BASE IMAGE AND AN OVERLAID IMAGE

104
DETERMINE A NUMBER OF FEATURE POINTS IN THE OVERLAY AREA OF THE BASE IMAGE

106
DETERMINE A NUMBER OF FEATURE POINTS IN THE OVERLAY AREA OF THE OVERLAID IMAGE

108
COMPARE THE NUMBER OF FEATURE POINTS IN THE OVERLAY AREA OF EACH OF THE BASE IMAGE AND THE OVERLAID IMAGE

110
DETERMINE A TRANSPARENCY VALUE FOR THE OVERLAID IMAGE BASED ON THE COMPARISON

112
DISPLAY THE BASE IMAGE AND OVERLAID IMAGE ON AN ELECTRONIC DISPLAY, SUCH THAT THE OVERLAID IMAGE IS OVERLAID ON THE BASE IMAGE, WITH A TRANSPARENCY OF THE OVERLAID IMAGE BEING BASED ON THE DETERMINED TRANSPARENCY VALUE

*FIG. 4*

**FIG. 5**

**FIG. 6**

*FIG. 7*

*FIG. 8*

200

| PROCESSOR 202 | | ELECTRONIC DISPLAY 204 |
| | | INPUT DEVICE 206 |
| | | CAMERA 208 |
| | | TRANSCEIVER 210 |
| | | MEMORY 212 |

COMPUTING DEVICE

*FIG. 9*